# EUROPÄISCHE PATENTANMELDUNG

(11) **EP 4 599 665 A1**
(43) Veröffentlichungstag der Anmeldung: **13.08.2025**
(21) Anmeldenummer: 25154755.0
(22) Anmeldetag: 29.01.2025
(51) Int. Cl.: A01G 9/28

(54) **BEETEINFASSUNGSVORRICHTUNG**

(30) Priorität: 31.01.2024 DE 102024102784
(71) Anmelder: bellissa HAAS GmbH, 88285 Bodnegg-Rotheidlen (DE)
(72) Erfinder: Zapf, Timo, 88079 Kressbronn (DE)
(74) Vertreter: Daub, Thomas

(57) **Zusammenfassung**

Die Erfindung geht aus von einer Beeteinfassungsvorrichtung, insbesondere von einer Beeteinfassung, mit zumindest einem ersten Rahmenelement (12), welches dazu vorgesehen ist, eine erste Seite eines Beets (14) zu begrenzen, mit zumindest einem zweiten Rahmenelement (16), welches dazu vorgesehen ist, eine zweite Seite eines Beets (14) zu begrenzen, und mit zumindest einer Eckverbindungseinheit (18, 18', 18", 18‴), welche zu einer Verbindung des ersten Rahmenelements (12) mit dem zweiten Rahmenelement (16) vorgesehen ist.

Es wird vorgeschlagen, dass die Eckverbindungseinheit (18, 18', 18", 18‴) ein erstes einstückig mit dem ersten Rahmenelement (12) verbundenes Verbindungselement (20) und ein zweites einstückig mit dem zweiten Rahmenelement (16) verbundenes Verbindungselement (22) aufweist, wobei das erste Verbindungselement (20) zu einer direkten, lösbaren Verbindung mit dem zweiten Verbindungselement (22) frei von einem weiteren Verbindungsmittel vorgesehen ist.

## Beschreibung

### Stand der Technik

Die Erfindung betrifft eine Beeteinfassungsvorrichtung.

Es ist bereits eine Beeteinfassungsvorrichtung, insbesondere Beeteinfassung, mit zumindest einem ersten Rahmenelement, welches dazu vorgesehen ist, eine erste Seite eines Beets zu begrenzen, mit zumindest einem zweiten Rahmenelement, welches dazu vorgesehen ist, eine zweite Seite eines Beets zu begrenzen, und mit zumindest einer Eckverbindungseinheit, welche zu einer Verbindung des ersten Rahmenelements mit dem zweiten Rahmenelement vorgesehen ist, vorgeschlagen worden.

Die Aufgabe der Erfindung besteht insbesondere darin, eine gattungsgemäße Vorrichtung mit verbesserten Eigenschaften hinsichtlich eines Montagekomforts sowie einer Stabilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Beeteinfassungsvorrichtung, insbesondere einer Beeteinfassung, mit zumindest einem ersten Rahmenelement, welches dazu vorgesehen ist, eine erste Seite eines Beets zu begrenzen, mit zumindest einem zweiten Rahmenelement, welches dazu vorgesehen ist, eine zweite Seite eines Beets zu begrenzen, und mit zumindest einer Eckverbindungseinheit, welche zu einer Verbindung des ersten Rahmenelements mit dem zweiten Rahmenelement vorgesehen ist.

Es wird vorgeschlagen, dass die Eckverbindungseinheit ein erstes einstückig mit dem ersten Rahmenelement verbundenes Verbindungselement und ein zweites einstückig mit dem zweiten Rahmenelement verbundenes Verbindungselement aufweist, wobei das erste Verbindungselement zu einer direkten, lösbaren Verbindung mit dem zweiten Verbindungselement frei von einem weiteren Verbindungsmittel vorgesehen ist. Das erste Verbindungselement und das zweite Verbindungselement sind insbesondere korrespondierend ausgebildet.

Unter einer "Beeteinfassungsvorrichtung" soll in diesem Zusammenhang insbesondere eine Vorrichtung zu einer Begrenzung, insbesondere zu einer Erhöhung und Einfassung, eines Beets verstanden werden. Vorzugsweise ist die Beeteinfassungsvorrichtung dazu vorgesehen, ein Beet rundherum einzufassen. Bevorzugt ist die Beeteinfassungsvorrichtung dazu vorgesehen, ein Beet einzuschließen. Vorzugsweise ist die Beeteinfassungsvorrichtung dazu vorgesehen, aufgestellt und mit Humuserde oder dergleichen befüllt zu werden. Vorzugsweise weist die Beeteinfassungsvorrichtung insbesondere vier Begrenzungsseiten auf. Die Beeteinfassungsvorrichtung ist insbesondere von einer Beeteinfassung, insbesondere von einer Hochbeeteinfassung gebildet. Die Beeteinfassungsvorrichtung bildet insbesondere einen, bevorzugt rechteckigen, Rahmen zu einer Einfassung eines Beets aus. Vorzugsweise umfasst die Beeteinfassungsvorrichtung zumindest zwei, insbesondere vier Rahmenelemente. Bevorzugt weist die Beeteinfassungsvorrichtung ein erstes Rahmenelement, ein zweites Rahmenelement, ein drittes Rahmenelement und ein viertes Rahmenelement auf. Unter einem "Rahmenelement" soll in diesem Zusammenhang insbesondere ein Element verstanden werden, welches zumindest einen Rahmenschenkel der Beeteinfassungsvorrichtung ausbildet. Vorzugsweise bildet das Rahmenelement zumindest eine Begrenzungswand auf, welche dazu vorgesehen ist ein Beet in zumindest eine Richtung zu begrenzen. Vorzugsweise umfasst das Rahmenelement zumindest eine Seitenwand, welche zu einer direkten Begrenzung eines Beets vorgesehen ist. Die Seitenwand ist insbesondere von einem ebenen, rechteckigen Teilelement des Rahmenelements gebildet, welches eine Seite der Beeteinfassungsvorrichtung ausbildet. Die Beeteinfassungsvorrichtung weist insbesondere eine Quaderform auf, welche zumindest nach oben, insbesondere nach oben und unten hin geöffnet ist, wobei die Seitenwand zumindest eine Seite des Quaders ausbildet.

Unter einer "Eckverbindungseinheit" soll in diesem Zusammenhang insbesondere eine Einheit verstanden werden, welche zu einer Verbindung von zumindest zwei Rahmenelementen vorgesehen ist. Vorzugsweise ist die Eckverbindungseinheit dazu vorgesehen, zumindest zwei, insbesondere genau zwei Rahmenelemente in einem definierten Winkel miteinander zu verbinden. Bevorzugt ist die Eckverbindungseinheit dazu vorgesehen, zwei Rahmenelemente in einem Winkel von zumindest annähernd 90° miteinander zu verbinden. Die Eckverbindungseinheit ist insbesondere zu einer Steckverbindung vorgesehen. Die Eckverbindungseinheit umfasst insbesondere zwei korrespondierend ausgebildete Verbindungselemente, welche zu einer lösbaren Verbindung miteinander vorgesehen sind. Vorzugsweise sind die Verbindungselemente der Eckverbindungseinheit an verschiedenen Rahmenelementen angeordnet. Die Verbindungselemente einer Eckverbindungseinheit sind insbesondere an miteinander zu verbindenden Rahmenelementen angeordnet. Die Verbindungselemente sind insbesondere zu einer formschlüssigen, lösbaren Steckverbindung miteinander vorgesehen. Die Verbindungselemente weisen insbesondere jeweils zumindest eine Lasche auf, wobei die Laschen in einem verbundenen Zustand dazu vorgesehen sind, einander zu kontaktieren und einen Winkel der Rahmenelemente zueinander zu definieren. Der Ausdruck " zumindest annähernd 90°" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter "formschlüssig" soll insbesondere verstanden werden, dass aneinanderliegende Flächen von miteinander formschlüssig verbundenen Bauteilen eine in Normalenrichtung der Flächen wirkende Haltekraft aufeinander ausüben. Insbesondere befinden sich die Bauteile in einem geometrischen Eingriff miteinander.

Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Vorzugsweise ist das erste Verbindungselement einteilig mit dem ersten Rahmenelement ausgebildet und das zweite Verbindungselement einteilig mit dem zweiten Rahmenelement ausgebildet. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Vorzugsweise bestehen das erste Verbindungselement und das erste Rahmenelement sowie das zweite Verbindungselement und das zweite Rahmenelement jeweils aus einem Blech.

Unter "frei von einem weiteren Verbindungsmittel" soll in diesem Zusammenhang insbesondere verstanden werden, dass eine Verbindung zwischen den Verbindungselementen direkt über die Verbindungselemente selbst erfolgt und keine weiteren Verbindungsmittel wie Schrauben, Nieten oder dergleichen erfordert. Vorzugsweise ist die Verbindung der Eckverbindungseinheit zudem auch frei von einer zusätzlichen stoffschlüssigen Verbindung, wie beispielsweise einer Schweiß- oder Klebeverbindung zwischen den Verbindungselementen.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung der Beeteinfassungsvorrichtung kann insbesondere eine vorteilhaft stabile und leicht zu montierende Beeteinfassungsvorrichtung bereitgestellt werden. Es kann insbesondere eine Beeteinfassungsvorrichtung bereitgestellt werden, welche direkt schnell und einfach von einem Endkunden selbst montiert werden kann. Ferner kann insbesondere eine Anzahl an Teilen vorteilhaft gering gehalten werden. Es kann insbesondere auf Verbindungsmittel wie Schrauben oder Nieten verzichtet werden.

Ferner wird vorgeschlagen, dass das erste Rahmenelement zumindest eine Seitenwand aufweist, die sich parallel zu einer Haupterstreckungsebene des ersten Rahmenelements erstreckt, wobei sich das erste Verbindungselement direkt an die Seitenwand anschließt und sich in einem Winkel von zumindest annähernd 45° von der Seitenwand weg erstreckt. Vorzugsweise schließen das erste Verbindungselement und die Seitenwand einen Winkel von zumindest annähernd 45° ein. Vorzugsweise weist das erste Rahmenelement eine Haupterstreckungsrichtung auf, welche einer Haupterstreckungsrichtung der Seitenwand entspricht. Vorzugsweise schließt das erste Verbindungselement entlang der Haupterstreckungsrichtung an einem Ende der Seitenwand an die Seitenwand an. Eine Verbindungskante zwischen der Seitenwand und dem Verbindungselement erstreckt sich insbesondere senkrecht zu der Haupterstreckungsrichtung der Seitenwand. Eine Haupterstreckungsebene des Verbindungselements weist zu einer Haupterstreckungsebene des Rahmenelements insbesondere einen Winkel von zumindest annähernd 45° auf. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Dadurch kann insbesondere vorteilhaft ein definierter Winkel zwischen den Rahmenelementen bereitgestellt werden. Ferner kann dadurch insbesondere ein vorteilhaft einteiliges Rahmenelement mit Verbindungselement bereitgestellt werden.

Des Weiteren wird vorgeschlagen, dass das erste Verbindungselement von einer Lasche, insbesondere einer Blechlasche, gebildet ist. Vorzugsweise ist das erste Verbindungselement von einer rechteckigen Lasche, insbesondere Blechlasche, gebildet, welche direkt an die Seitenwand anschließt. Bevorzugt bestehen das erste Verbindungselement und die Seitenwand aus demselben durchgehenden Material. Die Lasche ist insbesondere eben ausgebildet. Eine Breite des ersten Verbindungselements beträgt insbesondere zumindest 3 cm, vorzugsweise zumindest 5 cm und besonders bevorzugt zumindest 7 cm. Eine Höhe des ersten Verbindungselements entspricht insbesondere einer Höhe der Seitenwand. Dadurch kann insbesondere ein vorteilhaftes erstes Verbindungselement bereitgestellt werden. Es kann insbesondere ein vorteilhaft einfaches erstes Verbindungselement bereitgestellt werden.

Es wird ferner vorgeschlagen, dass das zweite Rahmenelement zumindest eine Seitenwand aufweist, die sich parallel zu einer Haupterstreckungsebene des zweiten Rahmenelements erstreckt, wobei sich das zweite Verbindungselement direkt an die Seitenwand anschließt und sich in einem Winkel von zumindest annähernd 45° von der Seitenwand weg erstreckt. Vorzugsweise schließen das zweite Verbindungselement und die Seitenwand einen Winkel von zumindest annähernd 45° ein. Vorzugsweise weist das zweite Rahmenelement eine Haupterstreckungsrichtung auf, welche einer Haupterstreckungsrichtung der Seitenwand des zweiten Rahmenelements entspricht. Vorzugsweise schließt das zweite Verbindungselement entlang der Haupterstreckungsrichtung an einem Ende der Seitenwand an die Seitenwand des zweiten Rahmenelements an. Eine Verbindungskante zwischen der Seitenwand des zweiten Rahmenelements und dem zweiten Verbindungselement erstreckt sich insbesondere senkrecht zu der Haupterstreckungsrichtung der Seitenwand des zweiten Rahmenelements. Eine Haupterstreckungsebene des zweiten Verbindungselements weist zu einer Haupterstreckungsebene des zweiten Rahmenelements insbesondere einen Winkel von zumindest annähernd 45° auf. Dadurch kann insbesondere vorteilhaft ein definierter Winkel zwischen den Rahmenelementen bereitgestellt werden. Ferner kann dadurch insbesondere ein vorteilhaft einteiliges Rahmenelement mit Verbindungselement bereitgestellt werden.

Es wird weiter vorgeschlagen, dass das zweite Verbindungselement von einer Lasche, insbesondere einer Blechlasche, mit einem Falz gebildet ist, wobei der Falz dazu vorgesehen ist, das erste Verbindungselement teilweise zu umgreifen. Vorzugsweise umfasst das zweite Verbindungselement eine rechteckige Lasche, insbesondere Blechlasche, welche direkt an die Seitenwand anschließt. Bevorzugt bestehen das zweite Verbindungselement und die Seitenwand aus demselben durchgehenden Material. Die Lasche ist insbesondere eben ausgebildet. Eine Breite des zweiten Verbindungselements beträgt insbesondere zumindest 3 cm, vorzugsweise zumindest 5 cm und besonders bevorzugt zumindest 7 cm. Eine Höhe des ersten Verbindungselements entspricht insbesondere einer Höhe der Seitenwand. Der Falz schließt auf einer der Seitenwand des zweiten Rahmenelements abgewandten Seite direkt an die Lasche an. Der Falz ist gegenüber der Lasche insbesondere um zumindest 180° umgefalzt. Der Falz bildet zusammen mit der Lasche einen geschlossenen Falz aus. Der Falz ist von einer Umkantung gebildet. Vorzugsweise ist der Falz dazu vorgesehen, das erste Verbindungselement zwischen dem Falz und der Lasche des zweiten Verbindungselements aufzunehmen. Vorzugsweise ist der Falz in einem verbundenen Zustand der Eckverbindungseinheit dazu vorgesehen, eine freie Vorderkante der Lasche des ersten Verbindungselements in einer Ebene senkrecht zu einer Haupterstreckungsebene des zweiten Rahmenelements zu umgreifen. Dadurch kann insbesondere ein vorteilhaftes zweites Verbindungselement bereitgestellt werden. Es kann insbesondere eine vorteilhaft einfache, und insbesondere leicht herstellbare, Eckverbindungseinheit bereitgestellt werden.

Zudem wird vorgeschlagen, dass das erste Rahmenelement, das zweite Rahmenelement und die Eckverbindungseinheit zumindest zu einem Großteil aus einem Stahlblech bestehen. Vorzugsweise bestehen das erste Rahmenelement, das zweite Rahmenelement und die Eckverbindungseinheit vollständig aus einem Stahlblech. Das erste Rahmenelement, das zweite Rahmenelement und die Eckverbindungseinheit bestehen zumindest zu einem Großteil aus einem beschichten Stahlblech, aus einem Edelstahlblech oder aus einem Cortenstahlblech. Es wären jedoch auch andere, einem Fachmann als sinnvoll erscheinende Materialien denkbar. Dadurch kann insbesondere eine vorteilhaft stabile Beeteinfassungsvorrichtung bereitgestellt werden.

Ferner wird vorgeschlagen, dass das erste Rahmenelement und das zweite Rahmenelement jeweils eine Materialstärke zwischen 1 mm und 3 mm aufweisen. Vorzugsweise bestehen das erste Rahmenelement und das zweite Rahmenelement jeweils aus einem Stahlblech mit einer Materialstärke zwischen 1 mm und 3 mm. Dadurch kann insbesondere eine vorteilhaft stabile und leichte Beeteinfassungsvorrichtung bereitgestellt werden.

Des Weiteren wird vorgeschlagen, dass die Beeteinfassungsvorrichtung ein drittes Rahmenelement, welches dazu vorgesehen ist, eine dritte Seite eines Beets zu begrenzen, ein viertes Rahmenelement, welches dazu vorgesehen ist, eine vierte Seite eines Beets zu begrenzen, und zumindest drei Eckverbindungseinheiten, welche zu einer Verbindung der Rahmenelemente vorgesehen sind, aufweist, wobei jedes der Rahmenelemente jeweils einstückig mit zumindest einem ersten Verbindungselement einer der Eckverbindungseinheiten und einem zweiten Verbindungselement einer weiteren Eckverbindungseinheit ausgebildet ist. Vorzugsweise sind die Rahmenelemente jeweils identisch ausgebildet. Bevorzugt sind die Eckverbindungseinheiten identisch ausgebildet. Insbesondere weist die Beeteinfassungsvorrichtung genau vier Eckverbindungseinheiten auf, und zwar insbesondere eine erste Eckverbindungseinheit, eine zweite Eckverbindungseinheit, eine dritte Eckverbindungseinheit und eine vierte Eckverbindungseinheit. Vorzugsweise ist jedes der Rahmenelemente einstückig mit einem ersten Verbindungselement und einem zweiten Verbindungselement jeweils einer der Eckverbindungseinheiten ausgebildet. Dadurch kann insbesondere eine vorteilhaft rechteckige Beeteinfassungsvorrichtung bereitgestellt werden. Es kann insbesondere eine Beeteinfassungsvorrichtung bereitgestellt werden, welche aus identischen Rahmenelementen besteht. Dadurch kann insbesondere eine Anzahl an Bauteilen, insbesondere identischen Bauteilen, gering gehalten werden.

Es wird ferner vorgeschlagen, dass an einem ersten Ende des ersten Rahmenelements das erste Verbindungselement der ersten Eckverbindungseinheit angeordnet ist und auf einer dem ersten Ende abgewandten zweiten Ende ein zweites Verbindungselement der vierten Eckverbindungseinheit angeordnet ist, wobei das erste Rahmenelement einstückig mit dem ersten Verbindungselement der ersten Eckverbindungseinheit und einstückig mit einem zweiten Verbindungselement der vierten Eckverbindungseinheit ausgebildet ist.

Vorzugsweise ist jedes der Rahmenelemente einstückig mit einem ersten Verbindungselement und einem zweiten Verbindungselement jeweils einer der Eckverbindungseinheiten ausgebildet. Vorzugsweise ist an einem ersten Ende des zweiten Rahmenelements das erste Verbindungselement der zweiten Eckverbindungseinheit angeordnet und auf einer dem ersten Ende abgewandten zweiten Ende ein zweites Verbindungselement der ersten Eckverbindungseinheit angeordnet. Bevorzugt ist an einem ersten Ende des dritten Rahmenelements das erste Verbindungselement der dritten Eckverbindungseinheit angeordnet und auf einer dem ersten Ende abgewandten zweiten Ende ein zweites Verbindungselement der zweiten Eckverbindungseinheit angeordnet. Besonders bevorzugt ist an einem ersten Ende des vierten Rahmenelements das erstes Verbindungselement der vierten Eckverbindungseinheit angeordnet und auf einer dem ersten Ende abgewandten zweiten Ende ein zweites Verbindungselement der dritten Eckverbindungseinheit angeordnet. Dadurch kann insbesondere eine vorteilhaft rechteckige Beeteinfassungsvorrichtung bereitgestellt werden. Es kann insbesondere eine Beeteinfassungsvorrichtung bereitgestellt werden, welche aus identischen Rahmenelementen besteht.

Es wird weiter vorgeschlagen, dass zumindest zwei der vier Rahmenelemente identisch ausgebildet sind. Vorzugsweise sind zumindest das erste Rahmenelement und das dritte Rahmenelement identisch ausgebildet. Bevorzugt sind ferner das zweite Rahmenelement und das vierte Rahmenelement identisch ausgebildet. Dadurch kann insbesondere eine vorteilhaft rechteckige Beeteinfassungsvorrichtung bereitgestellt werden. Es kann insbesondere eine Beeteinfassungsvorrichtung bereitgestellt werden, welche aus identischen Rahmenelementen besteht. Dadurch kann insbesondere eine Anzahl an unterschiedlichen Bauteilen gering gehalten werden.

Ferner geht die Erfindung aus von einem Verfahren zur Montage der Beeteinfassungsvorrichtung. Es wird vorgeschlagen, dass die Rahmenelemente über die zumindest eine Eckverbindungseinheit senkrecht zu einer Montageebene ineinander geschoben werden, sodass ein statisch bestimmtes System entsteht.

Die erfindungsgemäße Beeteinfassungsvorrichtung sowie das Verfahren sollen hierbei nicht auf die oben beschriebene Anwendung und Ausführungsform beschränkt sein. Insbesondere können die erfindungsgemäße Beeteinfassungsvorrichtung sowie das Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Beeteinfassungsvorrichtung mit vier Rahmenelementen und vier Eckverbindungseinheiten in einer schematischen Darstellung,
- Fig. 2: ein erstes Rahmenelement, ein erstes Verbindungselement einer ersten Eckverbindungseinheit und ein zweites Verbindungselement einer vierten Eckverbindungseinheit der erfindungsgemäßen Beeteinfassungsvorrichtung in einer schematischen, isometrischen Darstellung,

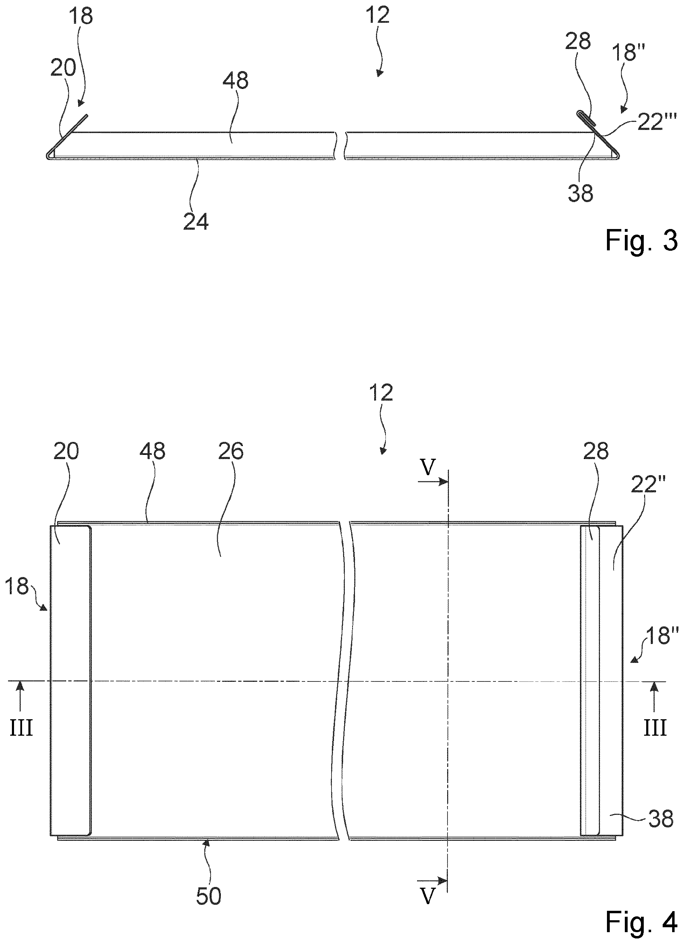

- Fig. 3: das erste Rahmenelement, das erste Verbindungselement der ersten Eckverbindungseinheit und das zweite Verbindungselement der vierten Eckverbindungseinheit der erfindungsgemäßen Beeteinfassungsvorrichtung in einer schematischen Schnittdarstellung in der Schnittebene III-III,
- Fig. 4: das erste Rahmenelement, das erste Verbindungselement der ersten Eckverbindungseinheit und das zweite Verbindungselement der vierten Eckverbindungseinheit der erfindungsgemäßen Beeteinfassungsvorrichtung in einer schematischen Seitenansicht,

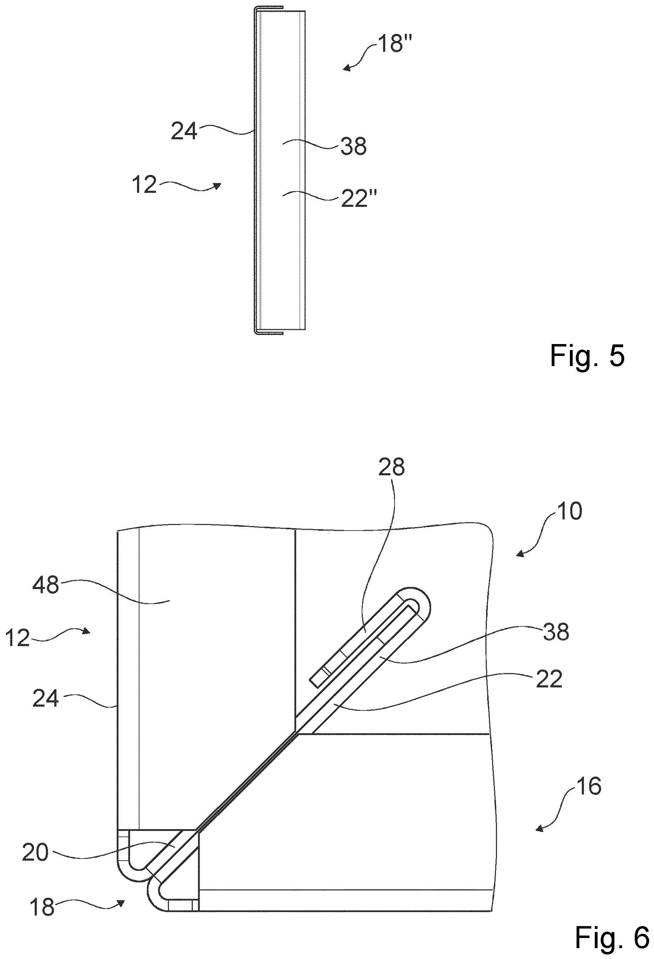

- Fig. 5: das erste Rahmenelement, das erste Verbindungselement der ersten Eckverbindungseinheit und das zweite Verbindungselement der vierten Eckverbindungseinheit der erfindungsgemäßen Beeteinfassungsvorrichtung in einer schematischen Schnittdarstellung in der Schnittebene V-V und
- Fig. 6: einen Teilausschnitt der ersten Eckverbindungseinheit in einer schematischen Darstellung von oben.

### Beschreibung des Ausführungsbeispiels

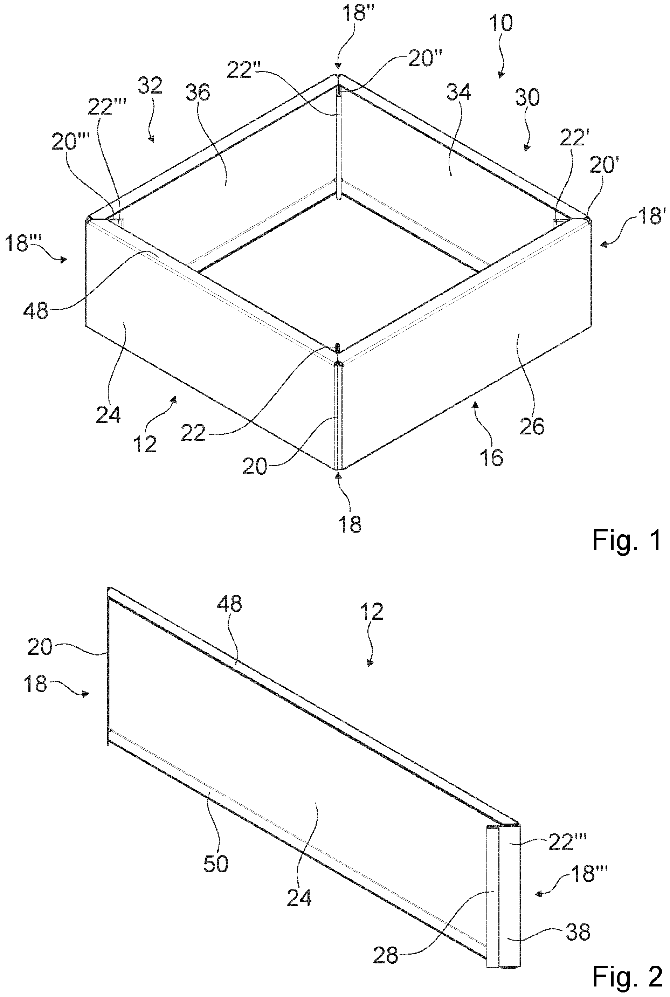

Die Figur 1 zeigt eine Beeteinfassungsvorrichtung 10. Die Beeteinfassungsvorrichtung 10 ist von einer Beeteinfassung gebildet. Die Beeteinfassungsvorrichtung 10 ist beispielhaft für ein Hochbeet. Es sind jedoch auch andere, einem Fachmann als sinnvoll erscheinende Anwendungen denkbar. Die Beeteinfassungsvorrichtung 10 ist dazu vorgesehen, ein Beet 14 einzuschließen. Die Beeteinfassungsvorrichtung 10 ist dazu vorgesehen, aufgestellt und mit Humuserde oder dergleichen befüllt zu werden. Die Beeteinfassungsvorrichtung 10 bildet einen rechteckigen Rahmen zu einer Einfassung eines Beets 14 aus. Die Beeteinfassungsvorrichtung 10 umfasst dazu vier Rahmenelemente 12, 16, 30, 32. Die Beeteinfassungsvorrichtung 10 weist ein erstes Rahmenelement 12, ein zweites Rahmenelement 16, ein drittes Rahmenelement 30 und ein viertes Rahmenelement 32 auf. Das erste Rahmenelement 12 ist dazu vorgesehen, eine erste Seite des Beets 14 zu begrenzen. Das zweite Rahmenelement 16 ist dazu vorgesehen, eine zweite Seite des Beets 14 zu begrenzen. Das dritte Rahmenelement 30 ist dazu vorgesehen, eine dritte Seite des Beets 14 zu begrenzen. Das vierte Rahmenelement 32 ist dazu vorgesehen, eine vierte Seite des Beets 14 zu begrenzen.

Die Rahmenelemente 12, 16, 30, 32 sind beispielhaft identisch ausgebildet. Zumindest zwei der vier Rahmenelemente 12, 16, 30, 32 sind identisch ausgebildet. Vorzugsweise sind zumindest das erste Rahmenelement 12 und das dritte Rahmenelement 30 identisch ausgebildet. Bevorzugt sind ferner das zweite Rahmenelement 16 und das vierte Rahmenelement 32 identisch ausgebildet. Die Rahmenelemente 12, 16, 30, 32 weisen jeweils eine Seitenwand 24, 26, 34, 36 auf. Die Seitenwände 24, 26, 34, 36 bilden jeweils eine Begrenzungswand aus. Die Seitenwände 24, 26, 34, 36 sind jeweils rechteckig ausgebildet. Die Seitenwände 24, 26, 34, 36 erstrecken sich jeweils parallel zu einer Haupterstreckungsebene des jeweiligen Rahmenelements 12, 16, 30, 32. Die Seitenwände 24, 26, 34, 36 sind jeweils eben ausgebildet und erstrecken sich jeweils über eine gesamte Breite der Beeteinfassungsvorrichtung 10. Ferner weisen die Rahmenelemente 12, 16, 30, 32 jeweils zwei Abkantungen 48, 50 auf. Eine erste Abkantung 48 der Abkantungen 48, 50 ist jeweils an einer Oberkante der Seitenwand 24, 26, 34, 36 des jeweiligen Rahmenelements 12, 16, 30, 32 angeordnet. Die ersten Abkantungen 48 sind jeweils von einem in einem 90° Winkel zu der jeweiligen Seitenwand 24, 26, 34, 36 nach innen abstehenden Falz gebildet. Eine zweite Abkantung 50 der Abkantungen 48, 50 ist jeweils an einer Unterkante der Seitenwand 24, 26, 34, 36 des jeweiligen Rahmenelements 12, 16, 30, 32 angeordnet. Die zweiten Abkantungen 50 sind jeweils von einem in einem 90° Winkel zu der jeweiligen Seitenwand 24, 26, 34, 36 nach innen abstehenden Falz gebildet. Die Abkantungen 48, 50 und die Seitenwand 24, 26, 34, 36 des jeweiligen Rahmenelements 12, 16, 30, 32 sind jeweils einteilig ausgebildet. Die Rahmenelemente 12, 16, 30, 32 bestehen jeweils aus einem zusammenhängenden Blech.

Ferner weist die Beeteinfassungsvorrichtung 10 zumindest eine Eckverbindungseinheit 18, 18', 18", 18‴ auf, welche zu einer Verbindung des ersten Rahmenelements 12 mit dem zweiten Rahmenelement 16 vorgesehen ist. Die Beeteinfassungsvorrichtung 10 weist vier Eckverbindungseinheiten 18, 18', 18", 18‴ auf. Die Eckverbindungseinheiten 18, 18', 18", 18‴ sind zu einer Verbindung der Rahmenelemente 12, 16, 30, 32 vorgesehen. Die Eckverbindungseinheiten 18, 18', 18", 18‴ sind zu einer Steckverbindung vorgesehen. Die Eckverbindungseinheiten 18, 18', 18", 18‴ umfassen jeweils zwei korrespondierend ausgebildete Verbindungselemente 20, 20', 20", 20'", 22, 22', 22", 22'", welche zu einer lösbaren Verbindung miteinander vorgesehen sind. Die Verbindungselemente 20, 20', 20", 20'", 22, 22', 22", 22‴ sind insbesondere zu einer formschlüssigen, lösbaren Steckverbindung miteinander vorgesehen. Die Eckverbindungseinheiten 18, 18', 18", 18‴ sind identisch ausgebildet. Die Beeteinfassungsvorrichtung 10 weist genau vier Eckverbindungseinheiten 18, 18', 18", 18‴ auf, und zwar insbesondere eine erste Eckverbindungseinheit 18, eine zweite Eckverbindungseinheit 18', eine dritte Eckverbindungseinheit 18" und eine vierte Eckverbindungseinheit 18'".

Die Eckverbindungseinheiten 18, 18', 18", 18‴ weisen jeweils ein einstückig mit einem der Rahmenelemente 12, 16, 30, 32 ausgebildetes erstes Verbindungselement 20, 20', 20", 20‴ auf und ein einstückig mit einem weiteren der Rahmenelemente 12, 16, 30, 32 ausgebildetes zweites Verbindungselement 20, 20', 20", 20‴ auf. Die erste Eckverbindungseinheit 18 weist ein erstes einstückig mit dem ersten Rahmenelement 12 verbundenes Verbindungselement 20 und ein zweites einstückig mit dem zweiten Rahmenelement 16 verbundenes Verbindungselement 22 auf. Die zweite Eckverbindungseinheit 18' weist ein erstes einstückig mit dem zweiten Rahmenelement 16 verbundenes Verbindungselement 20' und ein zweites einstückig mit dem dritten Rahmenelement 30 verbundenes Verbindungselement 22' auf. Die dritte Eckverbindungseinheit 18" weist ein erstes einstückig mit dem dritten Rahmenelement 30 verbundenes Verbindungselement 20" und ein zweites einstückig mit dem vierten Rahmenelement 32 verbundenes Verbindungselement 22" auf. Die vierte Eckverbindungseinheit 18‴ weist ein erstes einstückig mit dem vierten Rahmenelement 32 verbundenes Verbindungselement 20‴ und ein zweites einstückig mit dem ersten Rahmenelement 16 verbundenes Verbindungselement 22‴ auf. Vorzugsweise ist jedes der Rahmenelemente 12, 16, 30, 32 einstückig mit einem ersten Verbindungselement 20, 20', 20", 20‴ und einem zweiten Verbindungselement 22, 22', 22", 22‴ jeweils einer der Eckverbindungseinheiten 18, 18', 18", 18‴ ausgebildet. An einem ersten Ende des ersten Rahmenelements 12 ist das erste Verbindungselement 20 der ersten Eckverbindungseinheit 18 angeordnet und auf einer dem ersten Ende abgewandten zweiten Ende ist ein zweites Verbindungselement 22‴ der vierten Eckverbindungseinheit 18‴ angeordnet. Das erste Rahmenelement 12 ist einstückig mit dem ersten Verbindungselement 20 der ersten Eckverbindungseinheit 18 und einstückig mit einem zweiten Verbindungselement 22‴ der vierten Eckverbindungseinheit 18‴ ausgebildet. An einem ersten Ende des zweiten Rahmenelements 16 ist das erste Verbindungselement 20' der zweiten Eckverbindungseinheit 18' angeordnet und auf einer dem ersten Ende abgewandten zweiten Ende ist ein zweites Verbindungselement 22 der ersten Eckverbindungseinheit 18 angeordnet. Ferner ist an einem ersten Ende des dritten Rahmenelements 30 das erste Verbindungselement 20" der dritten Eckverbindungseinheit 18" angeordnet und auf einem dem ersten Ende abgewandten zweiten Ende ist ein zweites Verbindungselement 22' der zweiten Eckverbindungseinheit 18' angeordnet. Des Weiteren ist an einem ersten Ende des vierten Rahmenelements 32 das erste Verbindungselement 20‴ der vierten Eckverbindungseinheit 18‴ angeordnet und auf einem dem ersten Ende abgewandten zweiten Ende ein zweites Verbindungselement 22" der dritten Eckverbindungseinheit 18" angeordnet.

Die ersten Verbindungselemente 20, 20', 20", 20‴ sind jeweils zu einer direkten, lösbaren Verbindung mit dem zweiten Verbindungselement 22, 22', 22", 22‴ der jeweiligen Eckverbindungseinheit 18, 18', 18", 18‴ frei von einem weiteren Verbindungsmittel vorgesehen.

Die Eckverbindungseinheiten 18, 18', 18", 18‴ sind identisch ausgebildet. Im Folgenden wird daher lediglich die erste Eckverbindungseinheit 18 im Detail beschrieben. Die Beschreibung der ersten Eckverbindungseinheit 18 ist dabei jedoch grundsätzlich auch auf die anderen Eckverbindungseinheiten 18, 18', 18", 18‴ anwendbar.

Das erste Verbindungselement 20 der ersten Eckverbindungseinheit 18 schließt direkt an die Seitenwand 24 an und erstreckt sich in einem Winkel von zumindest annähernd 45° von der Seitenwand 24 weg. Das erste Verbindungselement 20 und die Seitenwand 24 schließen einen Winkel von zumindest annähernd 45° ein. Das erste Rahmenelement 12 weist eine Haupterstreckungsrichtung auf, welche einer Haupterstreckungsrichtung der Seitenwand 24 entspricht, wobei das erste Verbindungselement 20 entlang der Haupterstreckungsrichtung an einem Ende der Seitenwand 24 an die Seitenwand 24 anschließt. Eine Verbindungskante zwischen der Seitenwand 24 und dem Verbindungselement 20 erstreckt sich senkrecht zu der Haupterstreckungsrichtung der Seitenwand 24. Eine Haupterstreckungsebene des Verbindungselements 20 weist zu einer Haupterstreckungsebene des Rahmenelements 12 einen Winkel von zumindest annähernd 45° auf. Das erste Verbindungselement 20 ist von einer Lasche gebildet. Das erste Verbindungselement 20 ist von einer Blechlasche gebildet. Das erste Verbindungselement 20 ist von einer rechteckigen Lasche, insbesondere Blechlasche, gebildet, welche direkt an die Seitenwand 24 anschließt. Das erste Verbindungselement 20 und die Seitenwand 24 bestehen aus demselben durchgehenden Material. Das erste Verbindungselement 20 ist eben ausgebildet. Eine Breite des ersten Verbindungselements 20 beträgt zumindest 3 cm, vorzugsweise zumindest 5 cm und besonders bevorzugt zumindest 7 cm. Eine Höhe des ersten Verbindungselements 20 entspricht insbesondere einer Höhe der Seitenwand 24 des ersten Rahmenelements 12.

Das zweite Verbindungselement 22 der ersten Eckverbindungseinheit 18 schließt direkt an die Seitenwand 26 an und erstreckt sich in einem Winkel von zumindest annähernd 45° von der Seitenwand 26 weg. Das zweite Verbindungselement 22 und die Seitenwand 26 schließen einen Winkel von zumindest annähernd 45° ein. Das zweite Rahmenelement 16 weist eine Haupterstreckungsrichtung auf, welche einer Haupterstreckungsrichtung der Seitenwand 26 entspricht, wobei das zweite Verbindungselement 22 entlang der Haupterstreckungsrichtung an einem Ende der Seitenwand 26 an die Seitenwand 26 anschließt. Eine Verbindungskante zwischen der Seitenwand 26 und dem Verbindungselement 22 erstreckt sich senkrecht zu der Haupterstreckungsrichtung der Seitenwand 26. Eine Haupterstreckungsebene des zweiten Verbindungselements 22 weist zu einer Haupterstreckungsebene des zweiten Rahmenelements 16 einen Winkel von zumindest annähernd 45° auf. Das zweite Verbindungselement 22 ist von einer Lasche 38 mit einem Falz 28 gebildet, wobei der Falz 28 dazu vorgesehen ist, das erste Verbindungselement 20 teilweise zu umgreifen. Das zweite Verbindungselement 22 ist von einer Blechlasche mit einem Falz 28 gebildet. Das zweite Verbindungselement 22 umfasst eine rechteckige Lasche 38, insbesondere Blechlasche, welche direkt an die Seitenwand 26 des zweiten Rahmenelements 16 anschließt. Eine Breite des zweiten Verbindungselements 22 beträgt insbesondere zumindest 3 cm, vorzugsweise zumindest 5 cm und besonders bevorzugt zumindest 7 cm. Eine Höhe des zweiten Verbindungselements 22 entspricht insbesondere einer Höhe der Seitenwand 26. Der Falz 28 schließt auf einer der Seitenwand 26 des zweiten Rahmenelements 16 abgewandten Seite direkt an die Lasche 38 an. Der Falz 28 ist gegenüber der Lasche 38 insbesondere um zumindest 180° umgefalzt. Der Falz 28 bildet zusammen mit der Lasche 38 einen geschlossenen Falz aus. Der Falz 28 ist von einer Umkantung gebildet. Der Falz 28 ist dazu vorgesehen, das erste Verbindungselement 20 zwischen dem Falz 28 und der Lasche 38 des zweiten Verbindungselements 22 aufzunehmen. Vorzugsweise ist der Falz 28 in einem verbundenen Zustand der Eckverbindungseinheit 18 dazu vorgesehen, eine freie Vorderkante der Lasche des ersten Verbindungselements 20 in einer Ebene senkrecht zu einer Haupterstreckungsebene des zweiten Rahmenelements 16 zu umgreifen.

Die Verbindungselemente 20, 20', 20", 20''', 22, 22', 22", 22‴ weisen jeweils zumindest eine Lasche 38 auf, wobei die Laschen 38 in einem verbundenen Zustand dazu vorgesehen sind, einander zu kontaktieren und einen Winkel der Rahmenelemente 12, 16, 30, 32 zueinander zu definieren.

Das erste Rahmenelement 12, das zweite Rahmenelement 16 und die Eckverbindungseinheit 18 bestehen zumindest zu einem Großteil aus einem Stahlblech. Die Rahmenelemente 12, 16, 30 ,32 und die Eckverbindungseinheiten 18, 18', 18", 18‴ sind vollständig aus einem Stahlblech. Die Rahmenelemente 12, 16, 30, 32 und die Eckverbindungseinheiten 18, 18', 18", 18‴ bestehen aus einem beschichten Stahlblech, aus einem Edelstahlblech oder aus einem Cortenstahlblech. Die Rahmenelemente 12, 16, 30, 32 und die Eckverbindungseinheiten 18, 18', 18", 18‴ bestehen gemeinsam aus einem gebogenen Stahlblech. Die Rahmenelemente 12, 16, 30, 32 weisen jeweils eine Materialstärke zwischen 1 mm und 3 mm auf. Die Rahmenelemente 12, 16, 30 ,32 und die Eckverbindungseinheiten 18, 18', 18", 18‴ weisen gemeinsam eine konstante Materialstärke zwischen 1 mm und 3 mm auf.

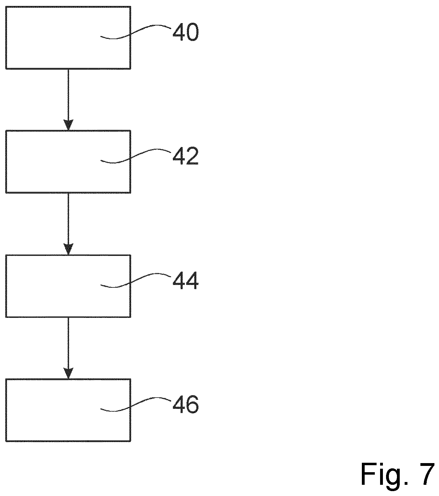

Figur 7 zeigt ein schematisches Ablaufdiagramm eines Verfahrens zur Montage der Beeteinfassungsvorrichtung 10. Bei dem Verfahren wird in einem ersten Verfahrensschritt 40 das erste Rahmenelement 12 über die erste Eckverbindungseinheit 18 mit dem zweiten Rahmenelement 16 verbunden. Die Rahmenelemente 12, 16 werden dazu senkrecht zu einer Montageebene ineinander geschoben. Anschließend wird in einem zweiten Verfahrensschritt 42 das dritte Rahmenelement 30 über die zweite Eckverbindungseinheit 18' mit dem zweiten Rahmenelement 16 verbunden. Das dritte Rahmenelement 30 wird dazu senkrecht zu einer Montageebene mit dem zweiten Rahmenelement 16 verbunden. Darauffolgend wird in einem dritten Verfahrensschritt 44 das vierte Rahmenelement 32 über die dritte und vierte Eckverbindungseinheit 18", 18‴ mit dem ersten und dritten Rahmenelement 12, 30 verbunden. Das vierte Rahmenelement 32 wird dazu senkrecht zu einer Montageebene mit dem ersten und dritten Rahmenelement 12, 30 verbunden. Die Rahmenelemente 12, 16, 30, 32 werden über die zumindest eine Eckverbindungseinheit 18, 18', 18", 18‴ senkrecht zu einer Montageebene ineinander geschoben, sodass ein statisch bestimmtes System entsteht. Anschließend kann die Beeteinfassungsvorrichtung 10 in einem weiteren Verfahrensschritt 46 befüllt werden.

### Bezugszeichenliste

- 10: Beeteinfassungsvorrichtung
- 12: Rahmenelement
- 14: Beet
- 16: Rahmenelement
- 18: Eckverbindungseinheit
- 20: Verbindungselement
- 22: Verbindungselement
- 24: Seitenwand
- 26: Seitenwand
- 28: Falz
- 30: Rahmenelement
- 32: Rahmenelement
- 34: Seitenwand
- 36: Seitenwand
- 38: Lasche
- 40: Verfahrensschritt
- 42: Verfahrensschritt
- 44: Verfahrensschritt
- 46: Verfahrensschritt
- 48: Abkantung
- 50: Abkantung

## Patentansprüche

1. Beeteinfassungsvorrichtung, insbesondere Beeteinfassung, mit zumindest einem ersten Rahmenelement (12), welches dazu vorgesehen ist, eine erste Seite eines Beets (14) zu begrenzen, mit zumindest einem zweiten Rahmenelement (16), welches dazu vorgesehen ist, eine zweite Seite eines Beets (14) zu begrenzen, und mit zumindest einer Eckverbindungseinheit (18, 18', 18", 18‴), welche zu einer Verbindung des ersten Rahmenelements (12) mit dem zweiten Rahmenelement (16) vorgesehen ist,
**dadurch gekennzeichnet, dass**
die Eckverbindungseinheit (18, 18', 18", 18‴) ein erstes einstückig mit dem ersten Rahmenelement (12) verbundenes Verbindungselement (20) und ein zweites einstückig mit dem zweiten Rahmenelement (16) verbundenes Verbindungselement (22) aufweist, wobei das erste Verbindungselement (20) zu einer direkten, lösbaren Verbindung mit dem zweiten Verbindungselement (22) frei von einem weiteren Verbindungsmittel vorgesehen ist.

2. Beeteinfassungsvorrichtung nach Anspruch 1,
**dadurch gekennzeichnet, dass**
das erste Rahmenelement (12) zumindest eine Seitenwand (24) aufweist, die sich parallel zu einer Haupterstreckungsebene des ersten Rahmenelements (12) erstreckt, wobei sich das erste Verbindungselement (20) direkt an die Seitenwand (24) anschließt und sich in einem Winkel von zumindest annähernd 45° von der Seitenwand (24) weg erstreckt.

3. Beeteinfassungsvorrichtung nach Anspruch 1 oder 2,
**dadurch gekennzeichnet, dass**
das erste Verbindungselement (20) von einer Lasche, insbesondere einer Blechlasche, gebildet ist.

4. Beeteinfassungsvorrichtung nach einem der vorhergehenden Ansprüche,
**dadurch gekennzeichnet, dass**
das zweite Rahmenelement (16) zumindest eine Seitenwand (26) aufweist, die sich parallel zu einer Haupterstreckungsebene des zweiten Rahmenelements (16) erstreckt, wobei sich das zweite Verbindungselement (22) direkt an die Seitenwand (26) anschließt und sich in einem Winkel von zumindest annähernd 45° von der Seitenwand (26) weg erstreckt.

5. Beeteinfassungsvorrichtung nach einem der vorhergehenden Ansprüche,
**dadurch gekennzeichnet, dass**
das zweite Verbindungselement (22) von einer Lasche (38), insbesondere einer Blechlasche, mit einem Falz (28) gebildet ist, wobei der Falz (28) dazu vorgesehen ist, das erste Verbindungselement (20) teilweise zu umgreifen.

6. Beeteinfassungsvorrichtung nach einem der vorhergehenden Ansprüche,
**dadurch gekennzeichnet, dass**
das erste Rahmenelement (12), das zweite Rahmenelement (16) und die Eckverbindungseinheit (18) zumindest zu einem Großteil aus einem Stahlblech bestehen.

7. Beeteinfassungsvorrichtung nach einem der vorhergehenden Ansprüche,
**dadurch gekennzeichnet, dass**
das erste Rahmenelement (12) und das zweite Rahmenelement (16) jeweils eine Materialstärke zwischen 1 mm und 3 mm aufweisen.

8. Beeteinfassungsvorrichtung nach einem der vorhergehenden Ansprüche,
**gekennzeichnet durch**
ein drittes Rahmenelement (30), welches dazu vorgesehen ist, eine dritte Seite eines Beets (14) zu begrenzen, ein viertes Rahmenelement (32), welches dazu vorgesehen ist, eine vierte Seite eines Beets (14) zu begrenzen, und zumindest drei Eckverbindungseinheiten (18, 18', 18", 18‴), welche zu einer Verbindung der Rahmenelemente (12, 16, 30, 32) vorgesehen sind, wobei jedes der Rahmenelemente (12, 16, 30, 32) jeweils einstückig mit zumindest einem ersten Verbindungselement (20, 20', 20", 20‴) einer der Eckverbindungseinheiten (18, 18', 18", 18‴) und einem zweiten Verbindungselement (22, 22', 22", 22‴) einer weiteren Eckverbindungseinheit (18, 18', 18", 18‴) ausgebildet ist.

9. Beeteinfassungsvorrichtung nach einem der vorhergehenden Ansprüche,
**dadurch gekennzeichnet, dass**
an einem ersten Ende des ersten Rahmenelements (12) das erste Verbindungselement (20) der ersten Eckverbindungseinheit (18) angeordnet ist und auf einer dem ersten Ende abgewandten zweiten Ende ein zweites Verbindungselement (22‴) der vierten Eckverbindungseinheit (18‴) angeordnet ist, wobei das erste Rahmenelement (12) einstückig mit dem ersten Verbindungselement (20) der ersten Eckverbindungseinheit (18) und einstückig mit einem zweiten Verbindungselement (22‴) der vierten Eckverbindungseinheit (18‴) ausgebildet ist.

10. Beeteinfassungsvorrichtung nach einem der vorhergehenden Ansprüche,
**dadurch gekennzeichnet, dass**
zumindest zwei der vier Rahmenelemente (12, 16, 30, 32) identisch ausgebildet sind.

11. Verfahren zur Montage der Beeteinfassungsvorrichtung (12) nach einem der vorhergehenden Ansprüche.

12. Verfahren nach Anspruch 11,
**dadurch gekennzeichnet, dass**
die Rahmenelemente (12, 16, 30, 32) über die zumindest eine Eckverbindungseinheit (18, 18', 18", 18‴) senkrecht zu einer Montageebene ineinander geschoben werden, sodass ein statisch bestimmtes System entsteht.
